# EUROPÄISCHE PATENTSCHRIFT

(11) **EP 0 436 533 B1**
(45) Veröffentlichungstag und Bekanntmachung des Hinweises auf die Patenterteilung: **23.06.1993**
(21) Anmeldenummer: 89900246.3
(22) Anmeldetag: 19.12.1988
(51) Int. Cl.: B01J 35/04, F01N 3/28

(54) **WABENKÖRPER, INSBESONDERE MIT S-FÖRMIGEN, TEILWEISE VERSTÄRKTEN BLECHLAGEN**
HONEYCOMB STRUCTURE, IN PARTICULAR WITH S-SHAPED, PARTIALLY REINFORCED LAYERS OF SHEET METAL
CORPS EN NID D'ABEILLE, AYANT NOTAMMENT DES TOLES EN S PARTIELLEMENT RENFORCEES

(30) Priorität: 11.02.1988 DE 8801788 U
(43) Veröffentlichungstag der Anmeldung: 17.07.1991
(73) Patentinhaber: Emitec Gesellschaft für Emissionstechnologie mbH, 53797 Lohmar (DE)
(72) Erfinder: MAUS, Wolfgang, D-5060 Bergisch Gladbach 1 (DE); SWARS, Helmut, D-5060 Bergisch Gladbach 1 (DE)
(74) Vertreter: Kahlhöfer, Hermann, Dipl.-Phys.
(86) Internationale Anmeldenummer: EP8801178
(87) Internationale Veröffentlichungsnummer: WO8907488

(56) Entgegenhaltungen:
- DE-C- 2 902 779

## Beschreibung

Die vorliegende Erfindung betrifft einen metallischen Wabenkörper, insbesondere Katalysator-Trägerkörper für Verbrennungsmotoren, gemäß dem Oberbegriff des Anspruchs 1. Solche Wabenkörper sind aus der EP-A-0 245 737 bekannt. Mit gegensinnig verschlungenen strukturierten Blechen lassen sich sehr viele verschiedene Querschnittsformen ausfüllen, wobei sich gegen thermische Wechselbelastungen sehr widerstandsfähige Körper ergeben. Die typische, einem S ähnelnde Form der Bleche ist verhältnismäßig elastisch und ermöglicht es, alle Bleche an ihren Enden mit einem Mantelrohr fügetechnisch Zu verbinden, was gegenüber spiralig gewickelten Wabenkörpern erhebliche mechanische Vorteile mit sich bringt.

Bei besonders hoch beanspruchten Katalysator-Trägerkörpern und Sonderformen kann jedoch die dauerhafte Verbindung der Bleche mit einem Mantelrohr ein Problem sein. In solchen Fällen reißen unter Umständen Blechlagen nach längerer Beanspruchung in der Nähe des Mantelrohres ab, was die Lebensdauer eines solchen Körpers unnötig verkürzen kann.

Aus der DE-C-29 02 779 ist weiter für aus glatten und gewellten Blechstreifen bestehende Katalysator-Trägerkörper bekannt, daß die Blechstreifen unterschiedliche Dicke haben können. Auf welche Weise dies allerdings zur Verbesserung einer Befestigung des Körpers an einem Mantelrohr ausgenutzt werden kann, ist aus dieser Schrift nicht zu entnehmen.

Aufgabe der vorliegenden Erfindung ist die Schaffung eines Wabenkörpers, insbesondere Katalysator-Trägerkörpers, welcher eine gegen Abriß widerstandsfähigere Befestigung am Mantelrohr aufweist.

Zur Lösung dieser Aufgabe wird ein Wabenkörper mit den kennzeichnenden Merkmalen des Anspruchs 1 vorgeschlagen. Dazu weist der Stapel gegensinnig verschlungener, zumindest teilweise strukturierter Bleche an seiner Oberseite und/oder seiner Unterseite und/oder in seinem Inneren einzelne Lagen größerer Dicke auf, indem entweder dickere Bleche verwendet werden oder in dieser Lage mehrere gleich strukturierte dünne Bleche dicht aneinander liegen. Dabei können diese dickeren Lagen auch aus zwei oder mehr einzelnen Streifen bestehen, statt die ganze Breite des Stapels, d. h. die ganze axiale Tiefe des entstehenden Wabenkörpers auszufüllen. Die Wirkung dieser dickeren Blechlagen besteht darin, daß diese aufgrund ihrer größeren mechanischen Festigkeit nicht leicht am Mantelrohr abgerissen werden können. Darüber hinaus können diese dickeren Lagen auch die ihnen benachbarten Blechlagen mit festhalten, so daß auch diese entweder nicht am Mantelrohr abreißen, oder aber zumindest durch die dicke Lage trotz Abriß festgehalten werden. Sofern die einzelnen Blechlagen des Stapels untereinander verlötet sind, vorzugsweise an einer oder beiden Stirnseiten, so leiten die dickeren Lagen die im äußeren Bereich in der Nähe des Mantelrohres entstehenden Zugkräfte in das Innere des Wabenkörpers weiter, so daß die Kräfte auf wesentlich mehr verbindungsstellen verteilt werden, wodurch die Lebensdauer des Körpers erheblich erhöht wird.

Vorteilhafte Ausgestaltungen der Erfindung sind in den Ansprüchen 2 bis 8 angegeben.

Gemäß Anspruch 2 wird vorgeschlagen, daß etwa die mittlere Blechlage des Stapels eine größere Dicke aufweisen soll als die übrigen Lagen. Dies stellt fertigungstechnisch keinerlei Problem dar, insbesondere da die größere Dicke durch Aufeinanderschichten vieler dünner Bleche erreicht wird. Die Verstärkung der mittleren Blechlage führt zu einem symmetrischen Aufbau des entstehenden Körpers, was auch für die Kräfteverteilung von Vorteil ist.

Auch die in Anspruch 3 vorgeschlagene Verwendung von dickeren obersten und untersten Blechlagen des Stapels, ggf. in Verbindung mit der Ausgestaltung nach Anspruch 2, führt ebenfalls zu einem sehr symmetrischen Aufbau des entstehenden Körpers. Da außerdem die oberste und unterste Blechlage des Stapels beim gegensinnigen Verschlingen zusammengefaltet werden, hat diese Alternative den Vorteil, daß eine entsprechend dünnere Blechlage oder eine entsprechend geringere Anzahl an Blechen verwendet werden kann, um die gleiche Dicke der entstehenden Stege zu erreichen wie bei der Ausführung nach Anspruch 2.

Insbesondere bei ovalen bzw. elliptischen Formen, wie sie in der Zeichnung näher erläutert werden, bietet die vorgeschlagene Ausführung gemäß Anspruch 4 besondere Vorteile. Da ovale bzw. elliptische Formen empfindlich gegen Verformungen bei wechselndem Innendruck sind, ist eine etwa S-förmige Verbindungsbrücke zwischen den geraden bzw. schwächer gerundeten Bereichen des Mantelrohres eine für die Stabilität dieser Form besonders günstige Maßnahme. Auch hier werden durch einzelne dickere Lagen die außen in der Nähe des Mantelrohres auftretenden Kräfte wesentlich besser gleichmäßig in das Innere des Katalysator-Trägerkörpers verteilt, was u. a. auch die Schallentwicklung vermindert.

Gemäß Anspruch 5 wird vorgeschlagen, daß die dickeren Blechlagen glatte Blechlagen sein sollen. Während nach dem Stand der Technik viele verschiedene Blechstrukturen zur Bildung von für Abgas durchlässigen Kanälen bekannt sind, ist doch die am häufigsten verwendete Art der Struktur eine abwechselnde Schichtung von glatten und gewellten Blechlagen. In diesem Falle bietet es sich an, einige der glatten Blechlagen zu verstärken. Glatte Blechlagen verformen sich unter Zug weniger als gewellte und können daher die auftretenden Kräfte besser weiterleiten als gewellte Blechlagen.

Gemäß Anspruch 6 wird vorgeschlagen, daß die dickeren Blechlagen sich nicht über die ganze Breite des Stapels, d. h. nicht über die ganze axiale Länge des Wabenkörpers erstrecken sollen, sondern aus einem oder mehreren in axialer Richtung hintereinander liegenden Streifen bestehen können.

Insbesondere ist es günstig, wenn solche Streifen nur an einer oder beiden Stirnseiten eingelegt sind. Dies führt einerseits zu einer Materialeinsparung, trägt aber andererseits den verschiedenen Befestigungsmöglichkeiten und üblichen Lötverfahren z. B. für Katalysator-Trägerkörper Rechnung. Bei nur stirnseitig gelöteten Katalysator-Trägerkörpern genügt es beispielsweise für den erwünschten Erfolg, auch nur stirnseitig dickere Blechlagen vorzusehen, wie dies im Anspruch 7 vorgeschlagen wird. Grundsätzlich sind jedoch auch beliebige andere Positionen der dickeren Blechlagen innerhalb des Katalysator-Trägerkörpers möglich, insbesondere abhängig von der Größe der Lötbereiche zwischen Mantelrohr und den Blechlagen.

Gemäß Anspruch 8 wird auch für diese speziellen Wabenkörper eine stirnseitige Hochtemperaturlötung angewendet, welche vorzugsweise bis zu einer Tiefe von einigen Millimetern reicht.

Im Folgenden wird die Erfindung anhand einiger Ausführungsbeispiele näher erläutert. Die Erfindung ist jedoch nicht auf diese Ausführungsbeispiele beschränkt, sondern erstreckt sich ausdrücklich auf alle Querschnittsformen, welche sich mit einem Stapel gegensinnig verschlungener Bleche ausfüllen lassen.

Es zeigen
Figur 1 den Aufbau eines Blechstapels, wie er zur Herstellung eines erfindungsgemäßen, in diesem Falle runden Wabenkörpers geeignet ist,
Figur 2 einen aus dem Stapel gemäß Figur 1 durch gegensinniges Verschlingen hergestellten Wabenkörper,
Figur 3 eine Stirnseitenansicht eines erfindungsgemäßen Wabenkörpers mit elliptischem Querschnitt und
Figur 4 die Stirnansicht eines erfindungsgemäßen Wabenkörpers mit ovalem Querschnitt.

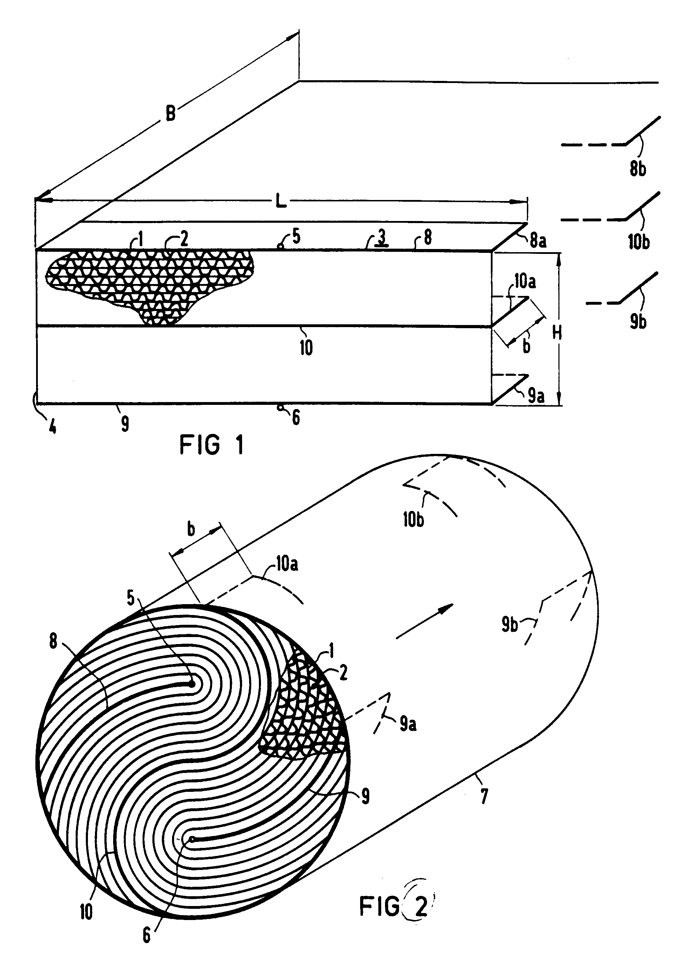

Figur 1 zeigt einen Stapel aus abwechselnd geschichteten glatten 1 und gewellten 2 Blechen, wie er sich zur Herstellung eines erfindungsgemäßen Wabenkörpers eignet. Der Stapel 3 hat eine Länge L, eine Höhe H und eine Breite B. Die Breite B entspricht der späteren axialen Ausdehnung des Wabenkörpers, das Produkt aus Länge und Höhe entspricht der späteren Querschnittsfläche des fertigen Wabenkörpes. Ein solcher Stapel 3 kann um zwei Fixpunkte 5 und 6 gegensinnig verschlungen werden, wie dies nach dem Stand der Technik bereits bekannt ist. Dabei können die seitlichen Enden 4 der einzelnen Blechlagen ganz oder in Teilbereichen mit einem Mantelrohr verbunden werden, insbesondere durch Hochtemperaturlötung. In vielen Fällen werden auch die Blechlagen 1, 2 beim fertigen Wabenkörper untereinander hochtemperaturverlötet, insbesondere im Bereich der Stirnseiten. Gemäß der Erfindung sind bei dem Stapel 3 einige der Blechlagen dicker als die übrigen. In Figur 1 sind beispielsweise die oberste Blechlage 8, die unterste Blechlage 9 und die mittlere Blechlage 10 dicker, indem entweder dickere Bleche verwendet werden oder mehrere glatte Bleche aufeinandergeschichtet sind. Dabei können sich diese dickeren Blechlagen alle oder teilweise über die ganze Breite B des Stapels erstrecken, sie können jedoch auch, wie im vorliegenden Fall angedeutet, nur als Streifen 8a, 8b bzw. 9a, 9b bzw. 10a, 10b ausgebildet sein, welche sich nur über einen Teil b der Breite B des Stapels erstrecken.

In Figur 2 ist ein Wabenkörper dargestellt, wie er nach dem gegensinnigen Verschlingen des Stapels aus Figur 1 entsteht. Die verschlungenen Blechlagen 1, 2 werden dabei in einem Mantelrohr 7 angeordnet und zumindest in Teilbereichen mit diesem fügetechnisch verbunden, insbesondere hochtemperaturgelötet. Die dickeren Blechlagen 8, 9, 10, welche ebenfalls mit dem Mantelrohr 7 fügetechnisch verbunden sind, können bei dieser Form von Wabenkörpern Kräfte vom äußeren Bereich in das Innere übertragen. Insbesondere reißen diese dickeren Blechlagen 8, 9, 10 nicht leicht vom Mantelrohr 7 ab und stabilisieren dadurch die ihnen benachbarten Lagen. Wie anschaulich leicht zu erkennen ist, sind bei dem fertigen Wabenkörper die ursprünglich oberste und unterste Lage des Stapels um die Fixpunkte 5 bzw. 6 geknickt und erhalten dadurch doppelte Dicke. Dies kann insbesondere bei der Verwendung einer Vielzahl dünner Bleche dadurch berücksichtigt werden, daß die oberste und die unterste Lage 8 bzw. 9 des Stapels 3 aus einer geringeren Anzahl Bleche erstellt werden. Wie in Figur 2 durch die schematisierte perspektivische Darstellung angedeutet ist, brauchen sich die dickeren Blechlagen 8, 9, 10 nicht über die ganze, durch Pfeil angedeutete axiale Ausdehnung des Wabenkörpers zu erstrecken. Die dickeren Blechlagen 8, 9, 10 können beispielsweise aus zwei stirnseitig angeordneten Teilstreifen 9a, 9b bzw. 10a, 10b der Breite b bestehen. Wichtig ist, daß die Teilstreifen mit dem Mantelrohr 7 fügetechnisch verbunden sind und vorzugsweise auch Verbindungen zu ihren Nachbarlagen aufweisen. Besonders günstig ist es, wenn die Blechlagen 1, 2, 8, 9, 10 stirnseitig einige Millimeter tief untereinander verlötet sind.

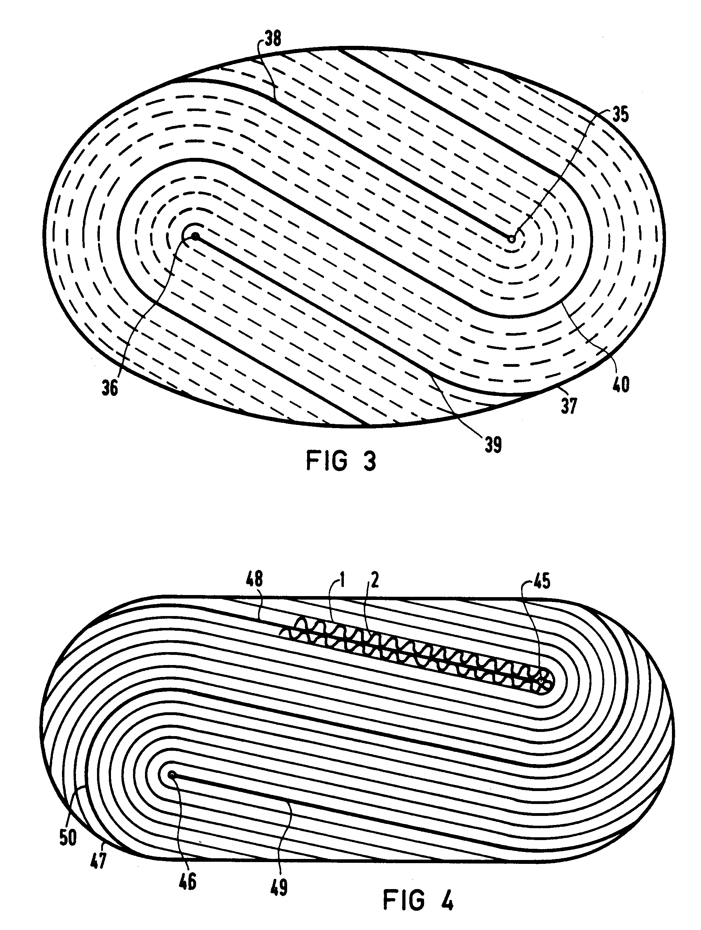

Ein weiteres Ausführungsbeispiel, für welches sich die Anwendung der vorliegenden Erfindung besonders eignet, ist in Figur 3 dargestellt. Es handelt sich um einen Wabenkörper mit elliptischem Querschnitt. Die einzelnen strukturierten Blechlagen sind hier lediglich gestrichelt angedeutet. Einige der Blechlagen, nämlich wiederum die oberste 38, unterste 39 und mittlere 40 Schicht des ursprünglichen Stapels, aus dem dieser Körper hergestellt ist, sind dicker als die übrigen Lagen. Durch ihre feste Verbindung mit dem Mantelrohr 37 stabilisieren sie den gesamten Körper und verhindern außerdem in gewissen Grenzen eine Verformung des Mantelrohres 37 durch hohen Innendruck. Ein solcher elliptischer Wabenkörper läßt sich wie auch viele andere Formen ebenfalls aus einem Stapel strukturierter Bleche durch gegensinniges Verschlingen der Enden um die Fixpunkte 35, 36 herstellen. Lediglich die Lage der Fixpunkte und die Form des Ausgangsstapels sind anders als bei der Herstellung von Wabenkörpern mit rundem Querschnitt.

Als weiteres Ausführungsbeispiel ist in Figur 4 ein Wabenkörper mit einem sogenannten ovalen Querschnitt dargestellt. Auch solche Körper lassen sich durch gegensinniges Verschlingen eines Stapels strukturierter Bleche 1, 2 um Fixpunkte 45, 46 herstellen. Auch in diesem Ausführungsbeispiel sind wiederum die oberste 48, unterste 49 und mittlere 50 Lage verstärkt.

Es sei darauf hingewiesen, daß es eine weitere Vielzahl von Querschnittsformen gibt, die sich mit gegensinnig verschlungenen Stapeln strukturierter Bleche ausfüllen lassen. Je nach Bedarf können dabei eine oder mehrere Blechlagen im Inneren des Stapels oder an seiner Ober- bzw. Unterseite verstärkt werden.

Die vorliegende Erfindung eignet sich besonders für Katalysator-Trägerkörper mit ovalem oder elliptischem Querschnitt, welche als Hauptkatalysator bei Kraftfahrzeugen eingesetzt werden sollen. Typische Blechdicken sind dabei z. B. für die nicht verstärkten Bleche 0,03 - 0,05 mm und für die verstärkten Bleche 0,15 - 2,0 mm.

## Patentansprüche

1. Wabenkörper, insbesondere Katalysator-Trägerkörper, vorzugsweise mit rundem, ovalem oder elliptischem Querschnitt, enthaltend einen gegensinnig verschlungenen Stapel zumindest teilweise strukturierter Bleche in einem Mantelrohr, die mit diesem zumindest in Teilbereichen fügetechnisch verbunden sind, **dadurch gekennzeichnet,** daß eine oder mehrere (8, 9, 10; 38, 39, 40; 48, 49, 50) der Blechlagen (1, 2) des Stapels (3) über die ganze oder einen Teil der Länge (L) und/oder Breite (B) des Stapels eine größere Dicke aufweisen als die übrigen Lagen, inoem diese Lage(n) (8, 9, 10; 38, 39, 40; 48, 49, 50) aus dickerem Blech oder einer Mehrzahl gleich strukturierter, dicht aneinander liegender dünner Bleche besteht (bzw. bestehen).

2. Wabenkörper nach Anspruch 1, **dadurch gekennzeichnet,** daß etwa die mittlere Blechlage (10; 40; 50) des Stapels (3) eine größere Dicke aufweist als die übrigen Lagen.

3. Wabenkörper nach Anspruch 1 oder 2, **dadurch gekennzeichnet,** daß die obere (8; 38; 48) und/oder die untere (9; 39; 49) Blechlage des Stapels (3) eine größere Dicke aufweisen.

4. Wabenkörper nach Anspruch 1 oder 2, **dadurch gekennzeichnet,** daß bei ovalen bzw. elliptischen Formen die Blechlage(n) (40; 50) größerer Dicke (eine) etwa S-förmige Verbindungsbrücke(n) zwischen den geraden bzw. schwächer gerundeten Bereichen des Katalysator-Trägerkörpers bildet (bzw. bilden), die die außen auftretenden Kräfte mit in das Innere des Katalysator-Trägerkörpers leitet (bzw. leiten).

5. Wabenkörper nach Anspruch 1, 2, 3 oder 4, **dadurch gekennzeichnet,** daß die Blechlage(n) (8, 9, 10; 38, 39, 40; 48, 49, 50) größerer Dicke glatte Blechlagen sind.

6. Wabenkörper nach einem der vorhergehenden Ansprüche, **dadurch gekennzeichnet,** daß die dickeren Blechlagen (8, 9, 10; 38, 39, 40; 48, 49, 50) sich nicht über die ganze axiale Länge des Katalysator-Trägerkörpers erstrecken, sondern aus einem oder mehreren in axialer Richtung hintereinander liegenden Streifen (10a, 10b) bestehen.

7. Wabenkörper nach Anspruch 6, **dadurch gekennzeichnet,** daß nur an einer oder beiden Stirnseiten Streifen (10a, 10b) mit einer Breite (b) in axialer Richtung von 1 bis 3 cm vorhanden sind.

8. Wabenkörper nach einem der vorhergehenden Ansprüche, **dadurch gekennzeichnet,** daß der Katalysator-Trägerkörper stirnseitig ganz oder teilweise hochtemperaturgelötet ist, vorzugsweise bis zu einer Tiefe von 3 bis 10 Millimetern.

## Claims

1. A honeycomb body, in particular a catalyst carrier body, preferably of round, oval or elliptical cross-section, including a stack, which is twisted in opposite directions, of at least partially structured plates in a casing tube, characterised in that one or are (8, 9, 10; 38, 39, 40; 48, 49, 50) of the plate layers (1, 2) of the stack (3) are of a greater thickness than the other layers over the whole or a part of the length (L) and/or width (B) of the stack, by said layer or layers (8, 9, 10; 38, 39, 40; 48, 49, 50) consisting of thicker plate or a plurality of identically structured thin plates which lie closely against each other.

2. A honeycomb body according to claim 1 characterised in that approximately the middle plate layer (10; 40; 50) of the stack (3) is of greater thickness than the other layers.

3. A honeycomb body according to claim 1 or claim 2 characterised in that the upper (8; 38; 48) and/or the lower (9; 39; 49) plate layer of the stack (4) are of a greater thickness.

4. A honeycomb body according to claim 1 or claim 2 characterised in that, with oval or elliptical shapes, the plate layer or layers (40; 50) of greater thickness forms or form one or are approximately S-shaped connecting bridges between the straight or less considerably rounded regions of the catalyst carrier body, which passes or pass the forces occurring at the outside into the interior of the catalyst carrier body.

5. A honeycomb body according to claim 1, claim 2, claim 3 or claim 4 characterised in that the plate layer or layers (8, 9, 10; 38, 39, 40; 48, 49, 50) of greater thickness are smooth plate layers.

6. A honeycomb body according to one of the preceding claims characterised in that the thicker plate layers (8, 9, 10; 38, 39, 40; 48, 49, 50) do not extend over the entire axial length of the catalyst carrier body but comprise one or are strips (10a, 10b) which are disposed one behind the other in the axial direction.

7. A honeycomb body according to claim 6 characterised in that strips (10a, 10b) of a width (b) in the axial direction of from 1 to 3 cm are provided only at one or both ends.

8. A honeycomb body according to one of the preceding claims characterised in that the catalyst carrier body is entirely or partially high-temperature soldered at its ends, preferably to a depth of from 3 to 10 millimeters.

## Revendications

1. Corps alvéolaire, en particulier corps support pour catalyseur, de préférence à section ronde, ovale ou elliptique, contenant dans une enveloppe tubulaire un empilement vrillé tête-bêche de tôles au moins partiellement structurées, celles-ci étant reliées à l'enveloppe de façon matériellement jointive au moins dans des parties de zones, caractérisé en ce qu'une ou plusieurs (8, 9, 10 ; 38, 39, 40 ; 48, 49, 50) des couches de tôles (1, 2) de l'empilement (3) présentent, sur toute ou partie de la longueur (L) et/ou de la largeur (B) de l'empilement, une épaisseur supérieure à celle des autres couches, cette (ces) couche(s) (8, 9, 10 ; 38, 39, 40 ; 48, 49, 50) étant formée(s) par une tôle plus épaisse ou par une pluralité de tôles plus minces identiquement structurées et disposées attenantes les unes aux autres.

2. Le corps alvéolaire de la revendication 1, caractérisé en ce que la couche de tôle (10 ; 40 ; 50) située approximativement au milieu de l'empilement (3) présente une épaisseur supérieure à celle des autres couches.

3. Le corps alvéolaire de la revendication 1 ou 2, caractérisé en ce que la couche de tôle supérieure (8 ; 38 ; 48) et/ou la couche de tôle inférieure (9 ; 39 ; 49) de l'empilement (3) présentent une épaisseur supérieure.

4. Le corps alvéolaire de la revendication 1 ou 2, caractérisé en ce que, dans le cas des formes ovales ou, respectivement, elliptiques, la (les) couche(s) de tôle (40 ; 50) d'épaisseur supérieure forme(nt) un (des) pont(s) de liaison en forme approximative de S entre les zones planes ou, respectivement, à faible courbure du corps support de catalyseur, pont(s) qui conduit (conduisent) l'énergie produite de l'extérieur dans l'intérieur du corps support de catalyseur.

5. Le corps alvéolaire de l'une des revendications 1, 2, 3 ou 4, caractérisé en ce que la (les) couche(s) de tôle(s) d'épaisseur supérieure (8, 9, 10 ; 38, 39, 40 ; 48, 49, 50) sont des couches de tôles lisses.

6. Le corps alvéolaire de l'une des revendications précédentes, caractérisé en ce que les couches de tôles plus épaisses (8, 9, 10 ; 38, 39, 40 ; 48, 49, 50) ne s'étendent pas sur toute la longueur axiale du corps support de catalyseur, mais sont formées par une ou plusieurs bandes (10a, 10b) s'étendant l'une derrière l'autre en direction axiale.

7. Le corps alvéolaire de la revendication 6, caractérisé en ce qu'il n'est prévu de bande (10a, 10b) qu'à une extrémité frontale ou qu'aux deux extrémités frontales, sur une largeur (b) de 1 à 3 cm en direction axiale.

8. Le corps alvéolaire de l'une des revendications précédentes, caractérisé en ce que le corps support de catalyseur est, frontalement, totalement ou partiellement soudé à haute température, de préférence sur une profondeur de 3 à 10 millimètres.
